Europäisches Patentamt

European Patent Office

Office européen des brevets

(11) Numéro de publication : **0 478 443 A1**

# (12) DEMANDE DE BREVET EUROPEEN

(21) Numéro de dépôt : **91402541.6**

(51) Int. Cl.⁵ : **A63F 9/18,** G09B 19/06

(22) Date de dépôt : **24.09.91**

(30) Priorité : **26.09.90 FR 9011876**

(43) Date de publication de la demande :
**01.04.92 Bulletin 92/14**

(84) Etats contractants désignés :
**AT BE CH DE DK ES FR GB GR IT LI LU NL SE**

(71) Demandeur : **JEUX FERNAND NATHAN & CIE
(Société Anonyme)
Orsud, 3-5 avenue Galliéni
F-94250 Gentilly (FR)**

(72) Inventeur : **Lions, François
63, rue du 19 Janvier
F-92380 Garches (FR)**

(74) Mandataire : **Lerner, François et al
5, rue Jules Lefèbvre
F-75009 Paris (FR)**

(54) **Appareil de jeu et d'éducation pouvant servir à l'enseignement des langues.**

(57)    L'invention concerne un appareil d'éducation du type comportant des moyens (101) de lecture d'un programme relié à des moyens de reproduction sonore (103) et comprenant des moyens de stockage d'informations (105, 106) ainsi que des moyens de relecture des informations stockées.
   Selon l'invention, les moyens (1) de lecture du programme comportent des moyens de déclenchement automatiques temporisés commandant le stockage dans une mémoire (105) de type numérique de parcelles d'informations du programme lues séquentiellement, partie après partie, l'appareil comprenant une autre mémoire (106) de type numérique dans laquelle l'utilisateur peut stocker des séquences d'informations, l'utilisateur pouvant en outre commander des moyens de relecture, de reproduction sonore et d'effacement des informations stockées dans lesdites mémoires numériques.
   L'invention s'applique notamment à l'enseignement des langues.

EP 0 478 443 A1

Jouve, 18, rue Saint-Denis, 75001 PARIS

FIG. 2

L'invention a pour objet un appareil de jeu et d'éducation et plus particulièrement un appareil pouvant servir à l'enseignement des langues.

De façon plus précise l'appareil de jeu et d'éducation de l'invention est du type comportant :
- des moyens de lecture d'un programme dont le fonctionnement est contrôlé par des moyens de commande (chargement, mise en route, arrêt, etc...) lesquels moyens de lecture sont reliés à des moyens audio de reproduction sonore,
- des moyens de stockage d'informations entrées par l'utilisateur de la machine,
- des moyens de relecture des informations entrées par l'utilisateur et qui sont reliés à des moyens audio de reproduction sonore.

Parmi ces appareils connus on peut en considérer essentiellement deux types.

Selon le premier type d'appareil connu, l'appareil comporte en mémoire un certain nombre de questions, par exemple relatives à la géographie, à l'histoire ou à tout autre domaine. Lorsque le programme de question défile, l'utilisateur doit répondre aux questions, et selon que ces réponses sont bonnes ou non, l'appareil enregistre par exemple un score et corrige éventuellement les réponses erronées.

Selon le second type d'appareil connu, il s'agit généralement d'un laboratoire de langues, l'appareil comportant des moyens d'enregistrement par exemple sur une bande magnétique d'un programme, par exemple des phrases types enregistrées par un professeur, des moyens d'enregistrement sur une autre bande des réponses de l'élève aux questions posées ou de la simple répétition de la phrase enregistrée par le professeur et des moyens permettant la réécoute et la comparaison de la phrase type enregistrée par le professeur et de la phrase telle qu'elle a été répétée par l'élève. Toutes ces opérations passent nécessairement par un déroulement de la ou des bandes magnétiques d'un magnétophone à plusieurs pistes et plusieurs têtes et rembobinage des diverses bandes pour retour arrière et réécoute. De tels dispositifs sont notamment décrits aux brevets US-A-4 380 438 et US-A-3 323 230.

Ces appareils ont l'inconvénient d'être très compliqués et relativement fragiles, compte tenu de la complexité des mécanismes et des fréquents retours arrière rapides et redéfilement des bandes auxquels ils sont soumis. En outre, leur gestion et leur utilisation ne sont pas des plus commodes.

L'invention a pour objet de résoudre ces difficultés.

A cet effet, l'appareil conforme à l'invention, du type général ci-dessus indiqué, se caractérise quant à lui en ce que les moyens de lecture du programme comportent des moyens de déclenchement automatiques temporisés commandant le stockage dans une mémoire de type numérique de parcelles d'informations du programme lues séquentiellement, partie après partie, et en ce que l'appareil comprend au moins une mémoire de type numérique susceptible de stocker une séquence d'informations entrée par l'utilisateur, ainsi que des moyens commandés par l'utilisateur pour la relecture, la reproduction sonore et l'effacement des informations stockées dans lesdites mémoires numériques.

On comprend qu'avec un tel agencement fondamentalement nouveau des fonctions d'enregistrement, de relecture et d'effacement, on obtienne un appareil d'emploi beaucoup plus pratique, économique et fiable, permettant en outre une souplesse d'emploi considérable.

L'invention apparaîtra plus clairement à l'aide de la description qui va suivre faite en référence aux dessins annexés dans lesquels :
- la figure 1 est un schéma synoptique d'un appareil conçu selon l'invention,
- la figure 2 montre comme la figure 1 le schéma d'un appareil modifié selon une variante,
- la figure 3 est un diagramme synoptique décrivant les fonctions essentielles d'initialisation de l'appareil par des messages sonores ("bips") stockés dans le programme.

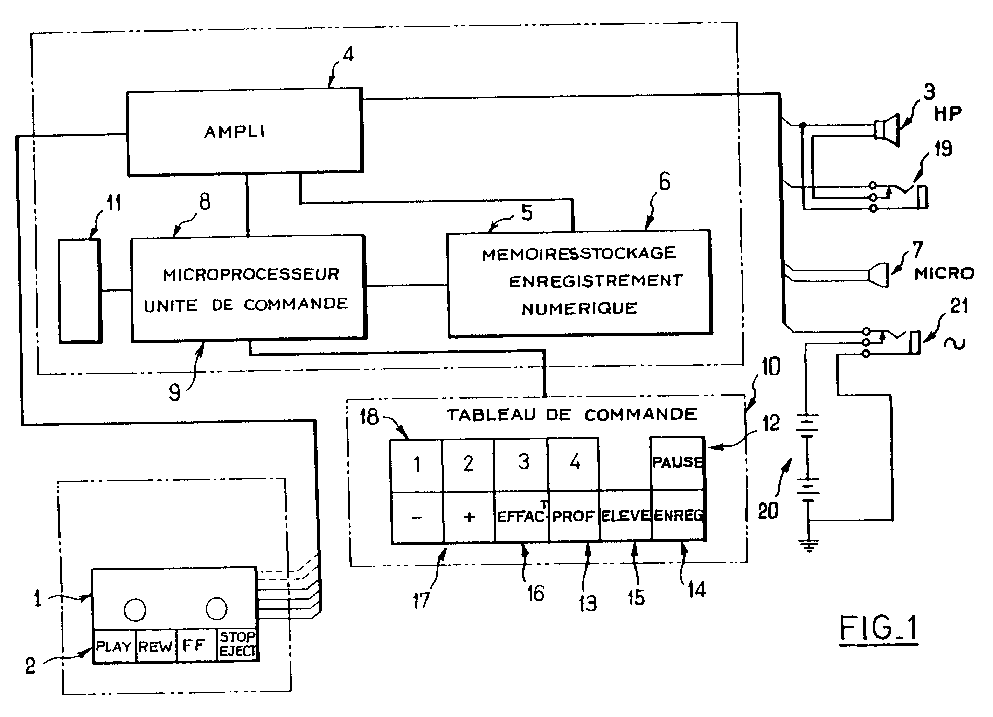

On se reportera tout d'abord à la figure 1 correspondant à une réalisation de l'appareil.

Selon le mode de réalisation illustré à cette figure, le progamme enregistré, par exemple un programme d'enseignement d'une langue, est enregistré sur une bande magnétique qui peut être une cassette à bande classique susceptible d'être lue par un lecteur 1 de cassette comportant les fonctions habituelles de commande telles qu'illustrées par les touches 2 référencées "play" pour déroulement, "REW" pour rembobinage, "FF" pour avance rapide et "STOP EJECT" pour arrêt de l'appareil et éjection de la cassette. Il est bien entendu cependant que le programme enregistré peut l'être par tout autre moyen que celui d'une cassette à bande magnétique, ce programme pouvant être porté par un disque classique, un disque compact pour lecture à rayon laser ou tout autre moyen de stockage permettant la lecture et le traitement des informations stockées.

Selon l'exemple illustré, les moyens 1 de lecture du programme sont reliés à travers un amplificateur 4 à des moyens de reproduction sonores tels qu'un haut-parleur 3 ou une prise 19 pour un casque d'écoute.

La sortie de l'amplificateur 4 est également reliée à une première mémoire 5 de stockage à enregistrement numérique et à une seconde mémoire 6 de stockage à enregistrement numérique dont la fonction sera décrite plus loin. Ces deux mémoires 5, 6 peuvent du reste avantageusement être constituées par les deux parties d'une même mémoire.

L'amplificateur 4 est également relié à des moyens tel qu'un micro 7 permettant l'entrée dans la memoire 6, comme il apparaîtra plus loin, des informations entrées par l'utilisateur.

L'appareil comprend en outre une unité de commande 8 du fonctionnement du lecteur 1 et des première et seconde mémoires 5, 6, cette unité de commande comprenant un ensemble à microprocesseur 9 de type classique, relié à des organes de commande, constitués par exemple par un clavier à touches référencé dans son ensemble 10.

L'unité de commande 8 est également reliée à des moyens d'affichage 11 d'informations relatives au fonctionnement de l'appareil et au déroulement du programme.

On décrira maintenant plus précisément la constitution du clavier de commande 10. Ce clavier comporte une touche 12 marquée "PAUSE" permettant d'arrêter le lecteur de cassette à la fin de la lecture d'une parcelle d'information du programme.

Ce clavier comporte également une touche référencée 13 et marquée "PROF" permettant de commander une relecture de la parcelle de programme stockée dans la mémoire 5, cette parcelle correspondant à la phrase type du programme de langue, s'il s'agit d'un programme relatif à l'enseignement des langues, prononcée par le professeur.

La touche 14 marquée "ENREG" pour "enregistrement" permet à l'utilisateur lorsqu'il enfonce cette touche de s'enregistrer par le micro 7 dans la mémoire de stockage 6.

La touche 15 marquée "ELEVE" lorsqu'elle est actionnée permet à l'utilisateur de réécouter les informations qu'il vient d'enregistrer par le micro 7 dans la mémoire de stockage 6.

Dans l'exemple illustré on a également prévu une touche 16 marquée "EFFACᵀ" pour effacement permettant lorsqu'elle est actionnée d'effacer les informations stockées par l'utilisateur dans la mémoire 6.

La touche 12 marquée "PAUSE" permet également lorsqu'elle est réactionnée, après un premier actionnement ayant commandé l'arrêt du défilement de la bande, de faire redémarrer l'appareil pour un nouveau défilement et la lecture d'une nouvelle parcelle d'information.

En 17 ont été indiquées par les signes + et - deux touches permettant le réglage du niveau sonore.

Enfin en 18 ont été indiquées quatre touches numérotées 1, 2, 3, 4 correspondant dans l'exemple illustré à quatre pistes parallèles de la bande, en supposant que le magnétophone comporte quatre pistes à lecture parallèle dont certaines peuvent éventuellement être lues simultanément ou au contraire séparément, selon par exemple que le programme d'enseignement peut se dérouler sur fond sonore ou sans fond sonore.

Pour terminer la description du schéma de la figure 1, on a illustré en 20 une alimentation par batterie de l'appareil et en 21 une alimentation par le secteur.

Le fonctionnement de l'appareil est le suivant.

Supposant que l'appareil ait été réinitialisé, c'est-à-dire mis à l'état zéro, et la bande du programme à son début, il suffit à l'utilisateur d'appuyer sur la touche "PLAY" du lecteur de bande et de sélectionner la ou les pistes 1, 2, 3 ou 4 du programme qu'il veut suivre.

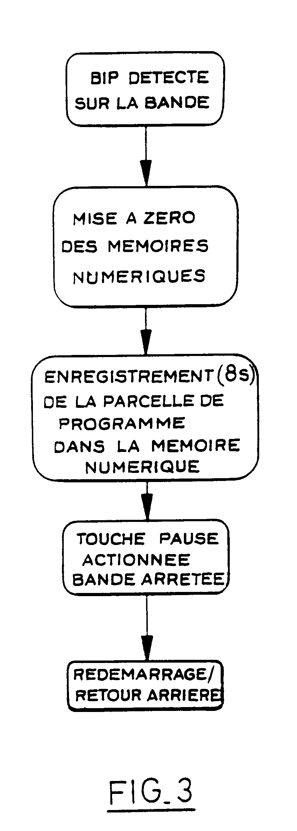

La mise en route du programme va être expliquée en faisant référence également à la figure 3.

La bande commençant à défiler, un bip sonore particulier est détecté sur la bande.

Ce bip met à zéro les mémoires numériques 5 et 6.

Ensuite de quoi, la bande du programme choisi défile automatiquement pendant un certain temps par exemple huit secondes correspondant à la parcelle d'information du programme qui va être étudiée et qui est stockée dans la mémoire à enregistrement numérique 5. Une fois cette opération effectuée, l'appareil s'arrête automatiquement.

A partir de ce moment l'utilisateur peut par exemple appuyer sur la touche d'enregistrement 14 "ENREG" et enregistrer par le micro 7 la parcelle d'information qui vient d'être stockée dans la mémoire 5 et qui parallèlement à ce stockage a été reproduite et a pu être écoutée par l'utilisateur soit par la sortie du haut-parleur 3, soit par le casque 19 si un casque a été branché.

Après cet enregistrement l'utilisateur peut se réécouter, c'est-à-dire écouter l'enregistrement qui vient d'être stocké dans la mémoire numérique 6 en appuyant sur la touche 15 marquée "ELEVE".

Il peut ensuite appuyer sur la touche 13 marquée "PROFESSEUR" pour, par comparaison écouter la même parcelle lue par le professeur et qui a été stockée dans la mémoire 5. S'il n'est satisfait de son enregistrement il appuie sur la touche 16 "EFFACEMENT", effaçant les informations contenues dans la mémoire 6, et peut recommencer l'opération d'enregistrement : écoute/comparaison autant de fois qu'il le souhaite.

Pour la poursuite du programme d'enseignement, c'est-à-dire lorsqu'il souhaite passer à la parcelle d'information suivante du programme, l'utilisateur appuie sur la touche "PAUSE" 12 qui remet en route la bande du lecteur 1.

Par cette opération, on se retrouve dans la situation déjà décrite où le lecteur de cassette redémarre, envoie un bip qui remet les mémoires à zéro comme illustré à la figure 3, avant enregistrement de la nouvelle parcelle d'information, par exemple de huit secondes, du programme dans la mémoire 5, après quoi l'appareil s'arrête laissant à l'utilisateur le soin d'effectuer à sa volonté les enregistrements, lectures, relectures, réenregistrements etc...aussi longtemps que l'utilisateur estime que ces diverses opérations sont utiles.

Avantageusement, l'appareil comprend au niveau du microprocesseur 9 qui le commande une temporisation qui déclenche automatiquement la lecture d'une nouvelle parcelle du programme après un laps de temps déterminé, par exemple de quinze secondes, si entre temps l'utilisateur n'a pas agi sur l'une des fonctions : enregistrement (touche 14), relecture du professeur (touche 13) ou de l'élève (touche 15) ou effacement (touche 16).

En outre, on peut prévoir avantageusement qu'après enregistrement d'une parcelle d'information, un nouvel actionnement de la touche "PAUSE" 12 commande l'avancement du programme d'une nouvelle parcelle, par exemple si l'utilisateur veut passer rapidement sur certaines séquences de l'enseignement pour étudier de façon plus approfondie telle ou telle autre séquence suivante.

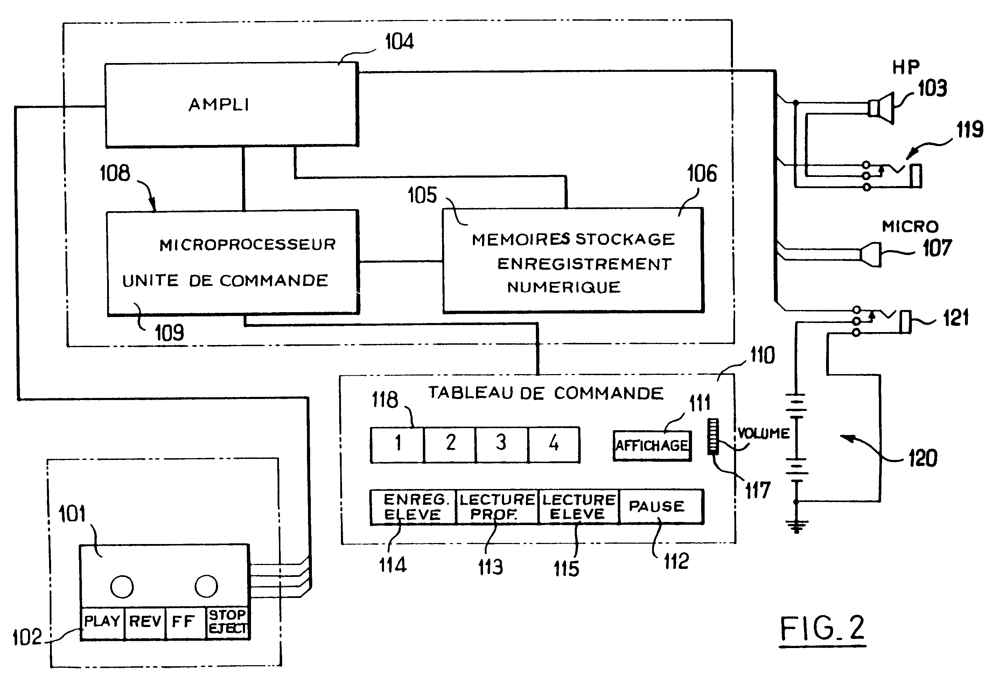

Dans la variante de réalisation illustrée à la figure 2, et dans laquelle les mêmes éléments que ceux illustrés à la figure 1 ont été référencés par les mêmes nombres augmentés de cent unités, la différence essentielle se trouve au niveau des touches de commande, d'enregistrement 114 en direction de la mémoire 106 (mémoire de l'élève), l'appareil ne comportant pas de touche d'effacement proprement dite telle que la touche 16 de l'appareil illustré à la figure 1.

Etant donné que les autres composants de l'appareil sont identiques, on ne redécrira pas le circuit de la figure 2, mais on décrira simplement rapidement le fonctionnement de cet appareil.

La mise en route de l'appareil se fait de la même manière que décrite précédemment après chargement du lecteur 101 rembobinage à son début de la cassette chargée du programme, enfoncement de la touche "PLAY" 102, et sélection des pistes 1 et/ou 2 et/ou 3 et/ou 4 118, au tableau 110.

La mise en route de l'appareil, sa réinitialisation et l'enregistrement de la première parcelle du programme se fait selon le schéma déjà décrit de la figure 3. Simultanément à ce chargement dans la mémoire 105 de la parcelle correspondante du programme, l'appareil délivre par les moyens audio qu'il comporte, haut-parleur 103 ou casque 119, la séquence audible de la parcelle correspondante, par exemple une phrase type prononcée par le professeur.

L'utilisateur peut ensuite en appuyant sur la touche 114 "ENREGISTREMENT" enregistrer au moyen du micro 107 sa version de la même phrase ou la réponse à la question posée. L'enregistrement s'effectue tant que l'utilisateur maintient le doigt appuyé sur la touche 114 et tant que la mémoire 106 n'est pas saturée. La mémoire 106 peut par exemple être prévue pour pouvoir stocker vingt quatre secondes d'information. Les moyens 111 d'affichage indiquent le temps d'enregistrement restant libre dans la mémoire 106. Lorsque l'utilisateur cesse son action sur la touche 114, l'appareil s'arrête.

Si l'utilisateur appuie sur la touche 113 du professeur, il peut réécouter la parcelle du programme qui a été stockée dans la mémoire 105.

Si l'utilisateur appuie sur la touche 115 de l'élève, il provoque la réécoute du message qu'il a enregistré par le micro dans la mémoire 106. S'il n'est pas satisfait de son enregistrement, il peut réenregistrer sa réponse en réappuyant sur la touche "ENREGISTREMENT" 114, ramenant l'enregistrement à zéro, cette opération effaçant simultanément l'enregistrement précédemment enregistré dans la mémoire 106.

Si l'utilisateur actionne la touche "PAUSE" 112, il commande le passage de l'appareil à la séquence suivante d'enseignement du programme.

Si l'utilisateur n'agit plus sur les touches, au bout d'un certain temps, par exemple quinze secondes, l'appareil déclenche automatiquement le défilement d'une nouvelle parcelle du programme, à partir du schéma de réinitialisation illustré à la figure 3.

Bien entendu l'invention n'est nullement limitée aux modes de réalisation illustrés et décrits qui n'ont été donnés qu'a titre d'exemples.

En particulier, il est bien clair que diverses variantes peuvent être apportées notamment en ce qui concerne l'organisation des diverses touches de commande, d'enregistrement du professeur et de l'élève, de relecture, réinitialisation et redémarrage.

De la même façon, au lieu d'utiliser un lecteur de cassette à bande magnétique multipistes, on peut utiliser d'autres moyens d'enregistrement, notamment du type compact disque, lecteur monopiste, etc...

Enfin bien que l'invention ait été décrite plus particulièrement en référence avec l'enseignement des langues, l'appareil se prêtant particulièrement bien à un système de dialogue entre l'utilisateur qui peut s'enregistrer et comparer sa version à la version du professeur, l'appareil peut être utilisé à d'autres objets, en particulier pour l'enseignement de toutes sortes de techniques et notamment toutes les techniques musicales ou vocales.

## Revendications

1. - Appareil de jeu et d'éducation du type comportant :
   – des moyens (1) de lecture d'un programme dont le fonctionnement est contrôlé par des moyens de commande (2), lesquels moyens de lecture sont reliés à des moyens audio de reproductions sonores,
   – des moyens de stockage d'informations entrées par l'utilisateur de la machine,
   – des moyens de relecture des informations entrées par l'utilisateur et qui sont reliés à des moyens audio de reproduction sonore, ledit appareil étant caractérisé en ce que :
   – les moyens (1) de lecture du programme comportent des moyens de déclenchement automatiques temporisés commandant le stockage dans une mémoire (5, 105) de type numérique de parcelles d'informations du programme lues séquentiellement, partie après partie,

– et en ce que l'appareil comprend au moins une mémoire (6, 106) de type numérique susceptible de stocker une séquence d'information entrée par l'utilisateur,

– ainsi que des moyens commandés par l'utilisateur (13, 14, 15, 16 ; 113, 114, 115) pour la relecture, la reproduction sonore et l'effacement des informations stockées dans lesdites mémoires numériques (5, 6, 105, 106).

**2.** - Appareil selon la revendication 1 caractérisé en ce que les mémoires numériques (5, 6 ; 105, 106) sont constituées par deux parties d'une même mémoire numérique.

**3.** - Appareil selon la revendication 1 ou la revendication 2 caractérisé en ce qu'il comprend des moyens de temporisation qui déclenchent automatiquement la lecture d'une nouvelle parcelle du programme après un laps de temps déterminé si l'utilisateur n'a pas entre temps agi sur une des fonctions : entrée d'information dans une mémoire numérique (6, 106) ou relecture d'information stockée dans une memoire numérique (5, 105 ; 6, 106).

**4.** - Appareil selon l'une des revendications précédentes caractérisé en ce qu'il comprend une procédure automatique de remise à zéro de l'appareil qui est initialisée automatiquement par un message (bip) porté par le programme au moins à son début.

**5.** - Appareil selon l'une des revendications précédentes caractérisé en ce qu'il comprend une procédure automatique de remise à zéro de l'appareil qui est initialisée automatiquement au début de chaque parcelle du programme.

**6.** - Appareil selon l'une quelconque des revendications précédentes caractérisé en ce qu'il comprend une procédure automatique remise à zéro de l'appareil qui est initialisée par appui sur la touche "PAUSE" (12, 112) de redémarrage de l'appareil.

FIG.1

AMPLI

MICROPROCESSEUR
UNITE DE COMMANDE

MEMOIRESSTOCKAGE
ENREGISTREMENT
NUMERIQUE

TABLEAU DE COMMANDE

| 1 | 2 | 3 | 4 | | PAUSE |
|---|---|---|---|---|---|
| − | + | EFFAC⁻ | PROF | ELEVE | ENREG |

PLAY | REW | FF | STOP EJECT

HP

MICRO

EP 0 478 443 A1

FIG. 2

BIP DETECTE
SUR LA BANDE

MISE A ZERO
DES MEMOIRES
NUMERIQUES

ENREGISTREMENT (8s)
DE LA PARCELLE DE
PROGRAMME
DANS LA MEMOIRE
NUMERIQUE

TOUCHE PAUSE
ACTIONNEE
BANDE ARRETEE

REDEMARRAGE/
RETOUR ARRIERE

FIG. 3

Office européen
des brevets

**RAPPORT DE RECHERCHE EUROPEENNE**

Numero de la demande

EP    91 40 2541

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | US-A-4 380 438 (OKAMOTO)<br>* colonne 2, ligne 55 - ligne 63 *<br>* colonne 3, ligne 25 - ligne 28 *<br>--- | 1-6 | A63F9/18<br>G09B19/06 |
| Y,D | US-A-3 323 230 (COOPER)<br>* colonne 1, ligne 37 - ligne 44 *<br>--- | 1-6 | |
| A | GB-A-2 170 076 (HASHIMOTO)<br>* revendication 1 *<br>--- | 4 | |
| A | GB-A-2 191 411 (YOUSUKE ET AL)<br>--- | | |
| A | US-A-4 372 554 (ORENSTEIN)<br><br>----- | | |

**DOMAINES TECHNIQUES RECHERCHES (Int. Cl.5)**

A63F
G09B

Le présent rapport a été établi pour toutes les revendications

| Lieu de la recherche | Date d'achèvement de la recherche | Examinateur |
|---|---|---|
| LA HAYE | 07 JANVIER 1992 | GLAS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)